# EUROPEAN PATENT SPECIFICATION

(11) **EP 0 629 462 B1**
(45) Date of publication and mention of the grant of the patent: **03.05.2000**
(21) Application number: 94100810.4
(22) Date of filing: 20.01.1994
(51) Int. Cl.: B23D 35/00, B23Q 1/00

(54) **Coolant feeder in a tool holder assembly**
Werkzeughalter mit Kühlmittelversorgung
Porte-outil muni d'un approvisionnement d'un réfrigérant

(30) Priority: 18.06.1993 JP 14785193; 27.07.1993 JP 18462793
(43) Date of publication of application: 21.12.1994
(73) Proprietor: Daishowa Seiki Co., Ltd., Higashiosaka-shi Osaka-fu (JP)
(72) Inventor: Kubo, Haruaki, Nara-shi, Nara (JP)
(74) Representative: Görg, Klaus, Dipl.-Ing.

(56) References cited:
- CH-A- 448 687
- GB-A- 2 103 123
- GB-A- 2 140 334
- US-A- 2 886 346
- US-A- 4 865 495

## Description

### BACKGROUND OF THE INVENTION

### Field of the Invention

The present invention relates to a coolant feeder in combination with a tool holder assembly according to the precharacterizing portion of claim 1.

### Description of the Prior Art

The rotating cutting tool with an oil hole has features to cool and lubricate the cutting edge by machining the workpiece while injecting coolant fed to the oil hole through the cutting edge and extend the service life of the cutting tools as well as improve the finished work surface.

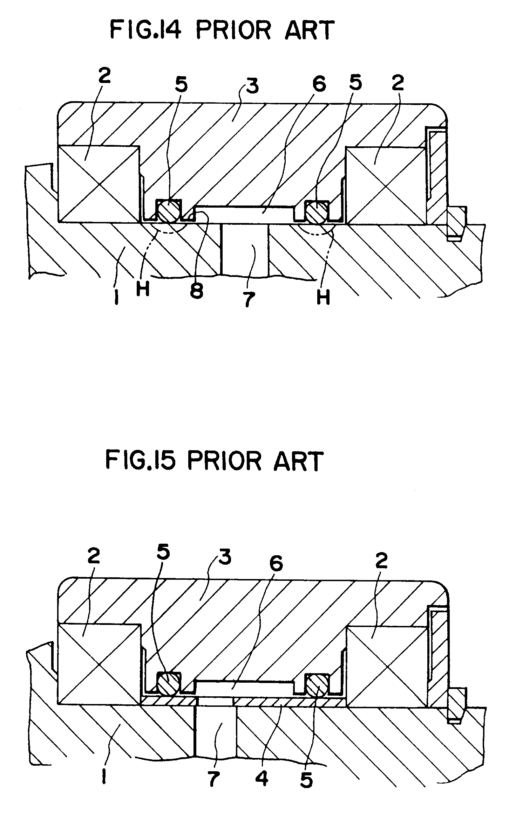

The conventional oil feeder in the tool holder of this type has a stationary support member 3 which rotatably supports the rotary shaft 1 as shown in Fig.14 built integral with a coolant passage connector later discussed which can be attached and removed to and from the coolant feeding base on the machine tool side, thereby allowing coolant to flow in the coolant feeding passage for tools formed in the rotary shaft via each coolant passage of the connector thereof and stationary support member 3, and feeds coolant to the oil hole of the tools through the said coolant passage.

In this event, because a coolant feeding passage is formed across the relative interface 8 between the stationary support member 3 at rest and the rotary shaft 1 in rotation, oiltight rings 5 are designed to be intermediately mounted between the two to prevent coolant leakage from the interface.

However, over a long period of service, cutting chips entering from the outside or contained in the coolant are entrained between the oiltight ring 5 and the circumferential surface of the rotating surface 1 which is brought rotatably in contact with the oiltight ring 5 through the said relative interface, and form a dent resulting from sliding frictional resistance of cutting chips, etc. on the circumferential surface of the rotary shaft in contact with the oiltight ring 5 as shown in an alternate long and two short dashes line H in Fig. 14, break oiltightness achieved by the oiltight rings and cause the coolant to leak from the dent, which enters bearings 2, 2 located with the coolant feeding passage set inbetween, and frequently causes accidents of damaging the said bearings 2,2.

In order to prevent this problem, in the past, the applicant of the present invention designed to intermediately install a replaceable sleeve 4 between both bearings 2, 2 located between the rotary shaft 1 and the stationary support member 3 rotatably supporting the said rotary shaft 1 via a pair of bearings 2, 2, as well as to intermediately support the oiltight ring 5 between the stationary support member 3 and the sleeve 4 as shown in Fig. 15.

In the configuration shown in Fig. 15 as above, when cutting chips, etc. entering from the outside or contained in the coolant enter between the oiltight ring 5 and the circumferential surface of the sleeve 4 rotatably in contact with the oiltight ring 5, form dents resulting from sliding frictional resistance of cutting chips, etc. on the circumferential surface of the sleeve 4 in contact with the oiltight ring 5, and break oiltightness secured by the oiltight ring 5, all we need is to remove the said sleeve 4 from the rotary shaft 1 for replacement, and there is no need to replace the expensive rotary shaft 1, providing an advantage of reducing repairing costs as much.

However, in the above-mentioned prior art, the stationary support member 3 is supported with bearings 2, 2 and at the time it is built integral with the aforementioned coolant passage connector, requiring all these parts to be disassembled when the sleeve 4 is replaced and to be reassembled to the original state when the sleeve 4 is mounted, and again producing a problem of extremely troublesome replacement operation.

US 4 865 495 describes a fluid inducer for coolant to a rotary cutting tool. For replacement of a sleeve interposed between sealing rings and a drill sleeve, the main inducer body can be separated from the bearing body. In the case of a damage of the sealing rings coolant can penetrate the bearings and damage them.

### Summary of the Invention

It is the primary object of the present invention to provide a coolant feeder in the tool holder which may not hinder any service by replacing only a worn portion without interfering with the fluid feeding operation in service, that is, without disassembling the stationary support member or coolant passage connector.

It is the second object of the present invention to provide a coolant feeder in the tool holder which may not interfere with the service without disassembling the stationary support member or coolant passage connector even if the rotary shaft wears slightly. It is a further object of the present invention to prevent coolant to penetrate the bearings in the case of a failing of the sealing operation.

These objects are achieved with a coolant feeder having the features of claim 1.

While the novel features of the invention are set forth particularly in the appended claim, the invention, both as to organization and content, will be better understood and appreciated, along with other objects and features thereof, from the following detailed description taken in conjunction with the drawings.

### Brief Description of the Drawings

Fig. 1 is a fragmentary cross-sectional view of one embodiment of the present invention.
Fig. 1a is a fragmentary cross-sectional view of the other embodiment of the essential part of the embodiment shown in Fig. 1.
Fig. 2 is an enlarged view of the essential part of Fig. 1.
Fig. 3 shows the operating condition of Fig. 2.
Fig. 4 is a side view of the present invention.
Fig. 5 is a fragmentary cross-sectional view of the essential part of the other embodiment of the present invention.
Fig. 6 is a fragmentary cross-sectional view of the essential part of another embodiment of the present invention.
Fig. 7 is a front view of the essential part of another embodiment of the present invention.
Fig. 8 is a fragmentary cross-sectional view of the essential part of still other embodiment of the present invention.
Fig. 9 is a fragmentary cross-sectional view of the essential part of still another embodiment of the present invention.
Fig. 10 is a fragmentary perspective view of the essential part of further embodiment of the present invention.
Fig. 11 is a fragmentary perspective view of the essential part of still further embodiment of the present invention.
Fig. 12 is a fragmentary perspective view of the essential part of embodiments of Figs. 8-9.
Fig. 13 is a fragmentary perspective view of the disassembled condition of the embodiments of Fig. 10 and Fig. 11.
Fig. 14 is a fragmentary cross-sectional view of the essential part of a conventional embodiment of the prior art.
Fig. 15 is a fragmentary cross-sectional view of the essential part of the other embodiment of the prior art.

It will be recognized that some or all the Figures are schematic representations for purposes of illustration and do not necessarily depict the actual relative sizes or locations of the elements shown.

### Detailed Description of the Preferred Embodiments

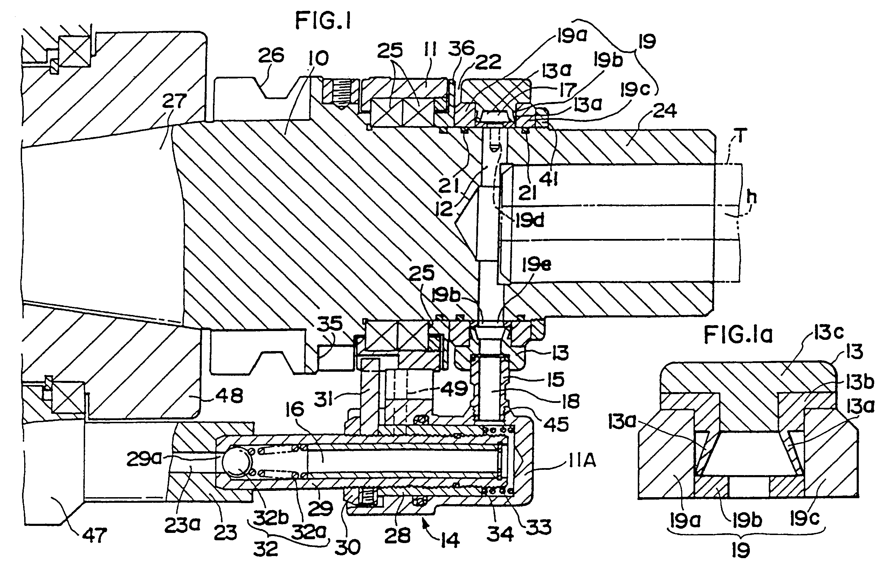

Fig. 1 shows one embodiment of the present invention in which an engagement ring 26 for manipulator and an outwardly tapering shank 27 are formed concentrically on one end of the rotary shaft 10, and on the other end a socket 24 to which cutting tool T with oil holes are formed concentrically.

The rotary shaft 10 is rotatably supported to the stationary support member 11 via the bearing 25, and to tee cylindrical chamber 11A formed at the radial protruded portion on one side, a coolant coupling device 14 which also serves as a staking mechanism is installed.

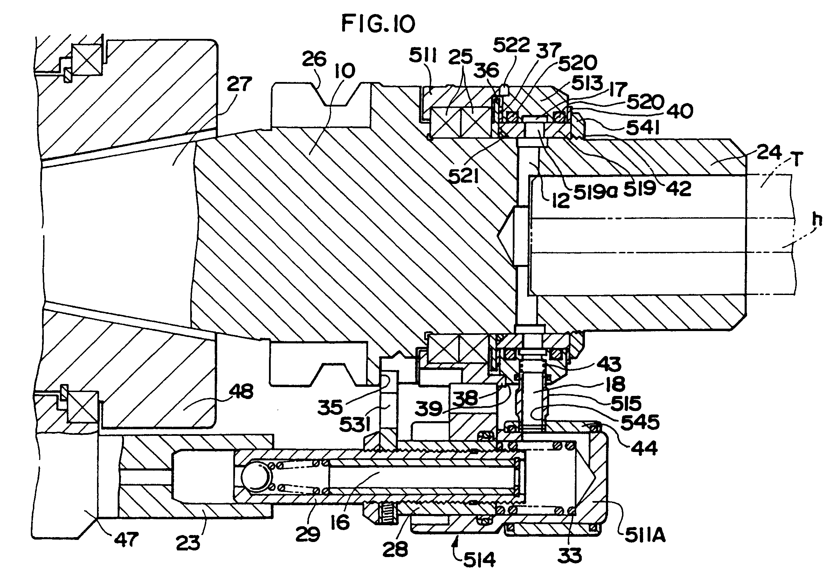

The coolant coupling device 14 comprises an outer sleeve 28 slidably accommodated within the said cylindrical chamber 11A in parallel to the rotary shaft 10 and extruding to the side where the shank 27 is located and an inner sleeve 29 threadingly inserted in the outer sleeve 28, and between the outer end of the outer sleeve 28 and the locknut 30 threadingly inserted into the inner sleeve 29,a positioner plate 31 is fixed. Inside the said inner sleeve 29, a check valve 32 comprising a spring 32a and a ball-form valve element 32b energized to close the coolant intake port 29a by means of the said spring 32a is mounted. The said outer sleeve 28 is energized outwardly by a compression coil spring 33, and the said coil spring 33 is interposed between the end surface 34 of the outer sleeve 28 and the bottom of the cylindrical chamber 11A. Because the outer sleeve 28 is pressed out outwardly with the energizing force of this spring 33, under the out-of-use condition (see Fig. 10), the idle end of the positioner plate 31 fits in the latch groove 35 provided in the rotary shaft 10 adjacent to the engagement ring 26 for the manipulator and latches the rotary shaft 10 with the stationary support member 11 in such a manner to prevent relative rotation. Fig. 1 shows the in-use condition, in which the stationary support member 11, that is, the coolant coupling device 14, is disengaged from the rotary shaft 10.

On the other hand, a stationary coolant feeder ring 13 is fitted over the rotary shaft 10 adjacent to the stationary support member 11. The mounting sequence is as follows: first, thick-wall ring-shaped No. 1 sleeve 19a is fitted over the rotary shaft 10 and brought in contact with the side surface of the stationary support member 11; then, the collar-shaped No. 2 sleeve 19b is fitted over the rotary shaft 10 and brought in contact with No. 1 sleeve 19a. Under this condition, the stationary coolant feeder ring 13 is fitted over No. 1 sleeve 19a and No. 2 sleeve 19b, and thereafter, No. 3 sleeve 19c is fitted over the rotary shaft 10, and finally a nut 41 is screwed into the rotary shaft 10 in such a manner to prevent axial displacement of the stationary coolant feeder ring 13 but only rotatably relative to the rotary shaft 10. No. 2 sleeve 19b is directly fixed to the rotary shaft 10 with a screw 19d as required. No. 1 to No. 3 sleeves 19a to 19c form a sleeve 19.

The stationary coolant feeder ring 13 has a pair of lips 13a, 13a protrudably installed on the inner circumferential surface thereof as shown in Figs. 1-3, and before it is fitted over the rotary shaft 10, the pair of lips 13a, 13a extend outwardly so that intervals they face opposite to each other are widened. Fitting this over the rotary shaft 10 via the sleeve 19 causes the pair of lips 13a, 13a to be held between No. 1 sleeve 19a and No. 3 sleeve 19c of the sleeve 19, bringing the side surfaces of both lips 13a, 13a in close contact with the side surfaces of both No. 1 and No. 3 sleeves 19a, 19c, while the tip ends of both lips 13a, 13a are designed to elastically deform to come in close contact with No. 2 sleeve 19b.

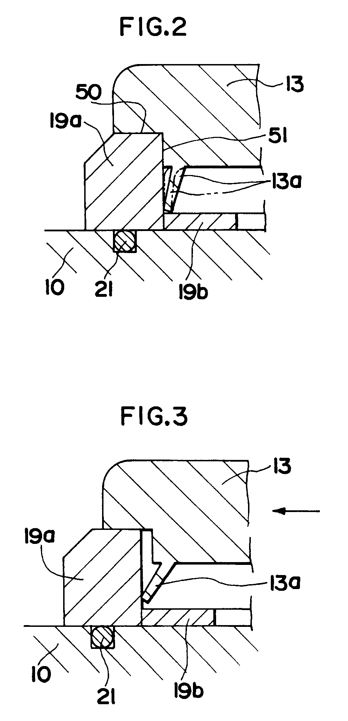

The stationary coolant feeder ring 13 is formed with hard synthetic resin material such as hard polyacetal resin, vinyl chloride, ABS resin, nylon, tetrafluoro resin, and the like and is designed to bring the side surface and the tip end of a pair of lips 13a, 13a protrudably mounted on the ring inner circumferential surface in close contact with the sleeve 19 to secure oiltightness betwen the two. On the inner circumferential surface of the stationary coolant feeder ring 13, an annular groove 17 is formed and with the pressure of the coolant fed to the said annular groove 17, both lips 13a, 13a are deflected toward the side wall of the No. 1 and No. 3 sleeves 19a, 19c as shown with the alternate long and short dash line in Fig. 2 so that oiltightness between the two is further secured.

The stationary coolant feeder ring 13 may have the portion 13b forming a pair of lips 13a, 13a built separately from the ring proper 13c as shown in Fig. 1a. In this event, the ring proper 13c may be made from steel or iron and the portion 13b forming a pair of lips 13a, 13a to be mounted to the ring proper may be made from the aforementioned hard synthetic resin.

The annular groove 17 communicates freely with a radial coolant passage 12 provided on the rotary shaft 10 via a bore 19e provided in the No. 2 sleeve 19b, and on the side of the stationary coolant ring 13 in contact with the above-mentioned coolant coupling device 14, a coolant pipe 15 is protrudably mounted in the radial direction, the tip end of which is connected to the connecting hole 45 provided on the cylindrical chamber 11A of the coolant coupling device 14.

The stationary coolant ring 13 is kept stationary by connecting the coolant pipe 15 to the coolant coupling device 14, thereby restricting the stationary coolant ring 13 with the coolant coupling device 14, and preventing the rotation.

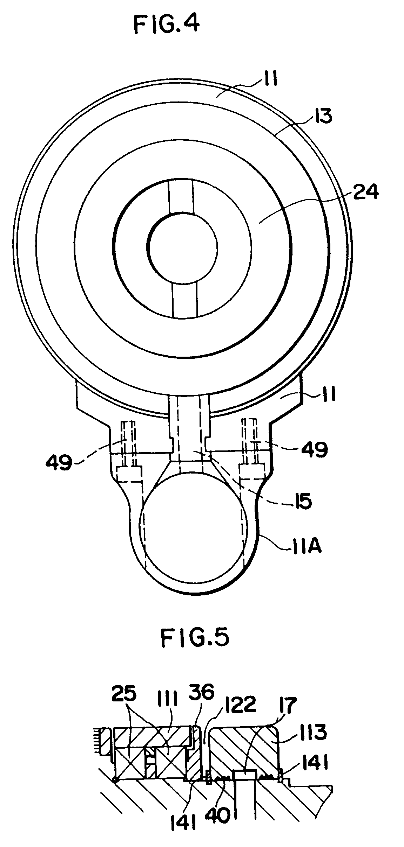

As shown in Fig. 4, the cylindrical chamber 11A, consequently, the coolant coupling device 14, is formed separately from the stationary support member 11,and both are designed to be coupled integral with bolts 49, 49. Consequently, in disassembling the stationary coolant feeding ring 13 from the rotary shaft 10, removing the nut 41 arresting the stationary coolant feeding ring 13 and untightening the bolts 49 coupling the coolant coupling device 14 to the stationary support member 11 enables the coolant coupling device 13 to be removed from the stationary support member 11 together with the coolant pipe 15 and the stationary coolant feeding ring 13 to be easily pulled out from the rotary shaft 11 together with the No. 3 sleeve 19c.

Arranging the stationary coolant feeding ring 13 axially adjacent to the stationary support member 11 eliminates the necessity to disassemble the stationary support member 11 pivoted by bearings 25, 25 from the rotary shaft 10, enabling quick disassembly operation as much.

In the embodiment shown in Fig. 1, because the stationary support member 11 and stationary coolant feeding ring 13, more precisely, the stationary support member 11 and No. 1 sleeve 19a are kept in direct contact, and between the No. 1 sleeve 19 and rotary shaft 10, sub-oiltight ring 21 is interposed, coolant from the stationary coolant feeding ring 13 does not leak on the stationary support member 11 side.

Coolant does not leak from the clearance between the No. 1 sleeve 19a and stationary coolant feeding ring 13 but even if coolant should leak unexpectedly,since a large gap 22 is provided between the stationary coolant feeding ring 13 and stationary support member 11, the leakage coolant is discharged outside from the said gap 22 and does not enter the stationary support member 11 side.

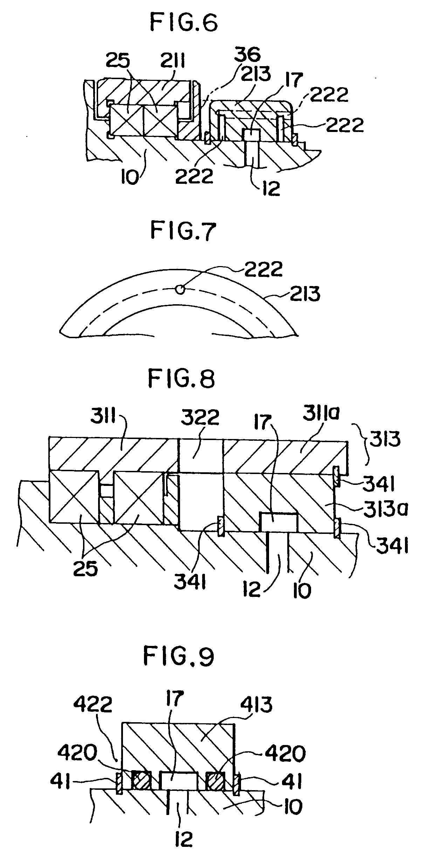

In the embodiment shown in Fig. 5, the stationary coolant feeding ring 113 is fitted over the rotary shaft 10 adjacent to the stationary support member 11, both ends of which are latched to the rotary shaft 10 with snap rings 141, 141 and mounted rotatably only relative to the rotary shaft 10. On the inner circumferential surface of the stationary coolant feeding ring 113, an annular groove 17 is formed and with the said annular groove 17 inbetween, on the inner circumferential surface of the stationary coolant feeding ring 13, the thread 40 is formed. This thread 40 prevents as much as possible the coolant from leaking to the stationary support member 11 side by restricting the coolant with the thread 40 through frictional action between the said thread 40 and the coolant when the coolant tries to leak to the outside from the clearance between the stationary coolant feeding ring 113 and the rotary shaft 10. If ever the coolant should leak outside unexpectedly, the leakage coolant can be discharged outside from the drain 122 between the stationary support member 11 and stationary coolant feeding ring 113. In Figs. 1 and 5, numeral 36 is a wear plate which protects bearing 25.

As shown in Figs. 6 and 7, a passage 222 for drainage which is in communication with the outside may be located between the stationary support member 211 and stationary coolant feeding ring 213 and be provided on the stationary coolant feeding ring 213 itself. In this event, it is not necessary to provide a clearance between the stationary support member 211 and the stationary coolant feeding ring 213 and as shown with the alternate long and short dash line, the stationary coolant feeding ring 213 may be designed to come in contact with the stationary support member 211 or the stationary coolant feeding ring 213 may be designed to be built integral with the stationary support member 211.

The aforementioned embodiment indicates the case where the stationary coolant feeding ring 13 is independently installed separately from the stationary support member 11 but the stationary support member 311 may be designed to be built integral with the stationary coolant feeding ring 313 as shown in Fig. 8. That is, the stationary support member 311 may be extended in the axial direction, on the inner circumferential side of the said extended portion 311a a stationary coolant feeding ring member 313a is mounted and with the snap rings 341, 341, 341 mounted to the extended side and the rotary shaft side, the stationary coolant feeding ring member 313a is installed in such a manner to prevent axial displacement but to enable rotation only relative to the rotary shaft 10.

Or for the stationary coolant feeding ring 13 or stationary coolant feeding ring member 13a whose inner circumferential surface is designed to come in direct contact with the rotary shaft 10 or sleeve 19 such as the stationary coolant feeding ring 13 in the embodiments shown in Figs. 1-7 or the stationary coolant feeding ring member 13a in the embodiment shown in Fig. 8, the material of the two may be changed to reduce friction between the two as much as possible, for example, the material of the stationary coolant feeding ring 13 may be formed with gun metal or hard resin material as against the steel used for the material ofthe rotary shaft 10, and hard synthetic resin material is desirable as described above particularly from viewpoint of processing or fabrication unit costs.

The oiltight ring 420 may also be allowed to intervene on the inner circumferential surface of the stationary coolant feeding ring 413 as shown in Fig. 9. In Fig. 8 also, though it is not illustrated, the oiltight ring may be allowed to intervene on the inner circumferential surface of the stationary coolant feeding ring member 313a.

Fig. 10 shows another embodiment, and while the embodiment shown in Fig. 1 indicates the in-use condition in which the coolant coupling device 14 is latched to the coolant feeding base 23, Fig. 10 shows the condition where the coolant coupling device 514 is released from the coolant feeding base 23. Consequently, the idle end of the positioner plate 531 fits in the dent groove 35 provided in the rotary shaft 10 adjacent to the engagement ring 26 and latches the rotary shaft 10 and stationary support member 11 in such a manner to prevent relative rotation.

In this embodiment, the sleeve 519 is allowed to intervene between the stationary coolant feeding ring 513 and rotary shaft 10, and the sleeve 519 is fixed to the rotary shaft 10 with a lock nut 541. That is, an annular groove 17 is provided on the inner circumferential surface of the stationary coolant feeding ring 513 and at the same time to the sleeve 519 a coolant passage 519a in communication with the said annular groove 17 is formed, and with these annular groove 17 and coolant passage 519a located inbetween, a pair of oiltight rings 520 in contact with the outer circumferential surface of the sleeve 519 is mounted on the inner circumferential surface of the stationary coolant feeding ring 513.

The coolant pipe 515 protrudably mounted to the stationary coolant feeding ring 513 is energized with the spring 43 to protrudably move as well as to retract against the energizing force of the spring 43. When the coolant pipe is protruded by being energized with the spring 43, it is designed to connect with the hollow 16 of the coolant coupling device. In the embodiment of Fig. 1, it is designed to directly connect with the connecting hole 45 provided in the cylindrical chamber 11A of the coolant coupling device 14 but it may be designed to connect with the hollow 16 of the coolant coupling device 514 by allowing the tip end of the coolant pipe 515 to fit into the connecting hole 545 formed on the cylindrical body 44 which fits oiltightly into the circumferential side of the cylindrical chamber 11A of the coolant coupling device 14 as shown in Fig. 10. Because this cylindrical body 44 can roll in the circumferential direction on the circumferential surface of the cylinder chamber 511A, it provides an advantage to adjust the circumferential fixing position of the coolant pipe 515 with respect to the coolant coupling device 514.

The sleeve 519 is desirable to be formed with a regular steel plate on which chromium is plated, a combination of hardened steel and cemented carbide, or the materials thereof coated with ceramics or titanniterite, or any other material whose surface possesses the wear resistance.

On the bearing 25 side of the inner circumferential surface of the sleeve 519, a sub-oiltight ring 521 is mounted closely in contact with the rotary shaft 10 and between the stationary coolant feeding ring 513 and sleeve 519 as well as stationary support member 11, a wear plate 36 and sliding contact plate 37 are interposed. To the stationary support member 511, an engagement protrusion 38 is formed (shown a little closer to the bottom in Fig. 10), and the said protrusion 38 is designed to latch with the latching dent 39 formed in the stationary coolant feeding ring 513. Consequently, the stationary coolant feeding ring 513 is latched to the stationary support member 511 and is held stationary. Other configuration is the same as that of the embodiment shown in Fig. 1, and therefore the explanation is omitted by assigning the same symbol to each component member as that in Fig. 1.

In the above embodiment, the oiltight ring 520 is interposed between the stationary coolant feeding ring 513 and the sleeve 519 and the sub-oiltight ring 521 is interposed between the sleeve 519 and the rotary shaft 10, but they may be brought directly in contact with each other without interposing the oiltight ring. In this event, in order to reduce friction between the two, the material of the two should be changed, for example, the material of the stationary coolant feeding ring 613 is formed with gun metal or hard resin material, while the sleeve 619 should be formed with either iron or steel. Numeral 621 is the sub-oiltight ring. Other configuration is the same as that of the embodiment shown in Fig. 10, and therefore the explanation is omitted by assigning the same symbol to each component member as that in Fig. 10.

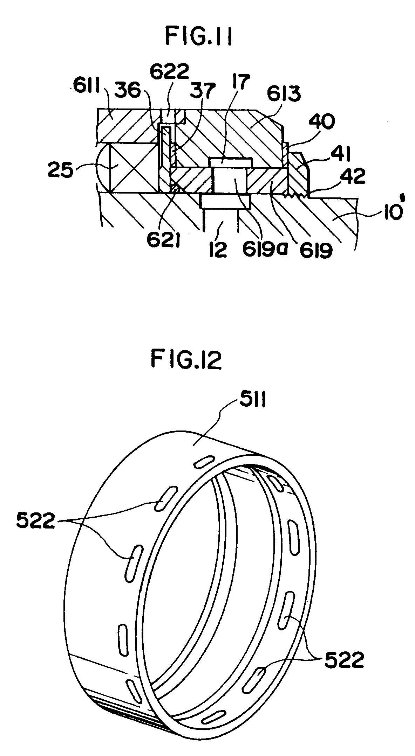

On the stationary support member 511 (611) shown in Figs. 10 and 11, a drain hole 522 as clearly shown in Fig. 12 is formed at proper intervals on the outer circumferential surface and the drain hole is arranged at the boundary between the stationary support member 511 and the stationary coolant feeding ring 513 as shown in Fig. 10.

In the embodiment shown in Fig. 10, a slide contact plate 40 also is mounted in contact with the tip end side of the stationary coolant feeding ring 513 and under this condition, a nut 41 is screwed into the thread 42 provided on the outer circumferential surface of the rotary shaft 10 to prevent axial displacement of the sleeve 519 and stationary coolant feeding ring 513 as well as to enable the sleeve 519 to rotate together with the rotary shaft 10.

In the equipment with the above-mentioned configuration, in the midst of using a tool holder, the coolant coupling device 14 which also serves to lock the stationary support member 11 is latched to the coolant feeding base 23 provided at the fixed portion 47 of the machine tool (Fig. 1); then, the positioner plate 31 retracts against the energizing force of the coil spring 33 and the engagement between the said member 31 and the dent groove 35 on the rotary shaft 10 side is released, and the rotary shaft 10 is rotatably held. Consequently, with the rotary shaft 10 held to the stationary support member 11, a specified cutting operation takes place with the rotating cutting tool T mounted to the socket 24 at the tip end.

Then, the coolant delivered from the coolant supply groove of the coolant feeding base pushes open the check valve 32, passes through the hollow 16 of the coolant coupling device 14, the radial passage 18 of the coolant pipe 15, and the annular groove 17 of the stationary coolant feeding ring 13, and with the inner circumferential surface of the said stationary coolant feeding ring 13 brought in direct and oiltight contact with the outer circumferential surface of the rotary shaft to properly maintain oiltightness, or with oiltightness properly held with a pair of oiltight rings 20, 20 at the relative interface between the stationary coolant feeding ring 13 and sleeve 19, is delivered through the radial passage 12 on the roatry shaft 10 side to the oil hole h of the cutting tool T and is discharged from the tip end of the said tool T.

In this event, there is a danger for the coolant to leak on the bearing 25 side where the stationary support member 11 is pivoted and to damage the said bearing 25, but in the present invention, because a drain 22 is interposed as required between the stationary coolant feeding ring 13 and stationary support member 11, even if the coolant flows out toward the bearing 25 unexpectedly, it is discharged outside from the drain 22 on the way and the said coolant does not enter the bearing 25.

In the embodiments shown in Figs. 1-3, because a pair of lips 13a, 13a are protrudably mounted integrally or separately on the inner circumferential surface of the stationary coolant feeding ring 13, feeding the coolant to the inner circumferential side of the stationary coolant feeding ring 13 presses both lips 13a, 13a strongly against the sleeve 19 with the pressure, thereby securing the oiltightness between the two with stronger force.

During operation, because the rotary shaft 1 and the sleeve 19 rotate but the stationary coolant feeding ring 13 does not rotate, the stationary coolant feeding ring 13 may move axially while the rotary shaft 10 is on the way of rotating, but as shown in Fig. 2, the displacement of the stationary coolant feeding ring 13 is designed to be prevented with the portions 50, 51 which are in contact with the sleeve 19.

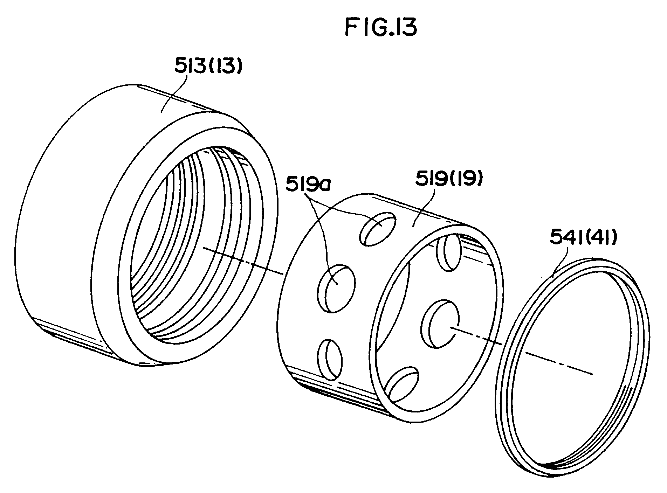

If during a long application period, cutting chips, etc. from the outside or contained in the coolant enters the clearance between the outer circumferential surface of the rotary shaft 10 or the sleeve 19, 519 and the stationary coolant feeding ring 13, 513, and the oiltightness between the stationary coolant feeding ring 13, 513 and the rotary shaft 10 or the sleeve 19, 519 is destroyed, in the embodiments shown in Figs. 1-9, untightening a pair of bolts 49, 49 as shown in Fig. 4 and disassembling the cylindrical chamber 11A from the stationary support member 11 enables the separation of the coolant pipe 15 from the stationary coolant ring 13, and in the embodiments of FIGs. 10 and 11, the coolant pipe 515 is retracted against the energizing force of the spring 43 and the said coolant pipe 515 is separated from the coolant coupling device 514, and under this condition, the nut 14 is removed and, as shown in Fig. 13, either the stationary coolant ring 13, 513 only or the sleeve 19, 519 and the stationay coolant feeding ring 13, 513 located around its outer circumferential side are integrally or separately removed from the socket 24 side, and the sleeve 19, 519 alone or with the worn oiltight ring 20, 520 can be replaced as required.

That is, because it is completely unnecessary to disassemble the stationary support member 11, 511 and the bearing 25 which pivots the stationary support member 11 or the coolant coupling device 514 built integral with the stationary support member 511 from the rotary shaft 10, replacement operation becomes extremely easy.

Lastly, the effects achieved by the configuration specified in the scope of each claim are described as follows.

According to the invention related to Claim 1, mounting the rotary shaft 10 to the spindle 48 of a machine tool and connecting the coolant coupling device 14, 514 which supports the stationary support member 11 (111, 211, 311, 411, 511, 611) free from rotation with the coolant feeding base 23 on the machine tool side enables the rotary shaft 10 to be rotatably pivoted by the said stationary support member 11 and the stationary coolant feeding ring 13 (113, 213, 313, 413, 513, 613) to be supported or latched with the stationary support member 11, or to be supported free from rotation by being restricted with the coolant coupling device 14, 514 via the coolant pipe 15, 515. With this configuration, the annular groove 17 of the stationary coolant feeding ring 13 is kept constantly in communication with the radial passage 18 of the coolant pipe 15, 515 as well as the hollow of the coolant coupling device 14, 514 irrespective to rotation of the rotary shaft 10, and consequently connecting the coolant coupling device 14, 514 with the above-mentioned coolant feeding base 23 allows the coolant from the coolant feeding base 23 to flow through the hollow 16 of the coolant coupling device 14, 514, the radial passage for coolant pipe 15, 515, and annular groove 16 of the stationary coolant feeding ring 13, the radial passage 18 of the oil pipe 15, 515, the annular groove 17 of the stationary coolant feeding ring 13 and radial passage 12 of the rotary shaft, then feeds to the oil hole h of the tool T.

When the stationary coolant feeding ring 13 wears over a long time of application, for example, if the stationary coolant feeding ring 13 is formed with hard resin and the inner circumferential surface of the stationary coolant feeding ring 13 in contact with the outer circumferential surface of the rotary shaft 10 wears and oiltightness between the two is slightly lost, the stationary coolant feeding ring alone can be replaced.

Consequently, it is not only unnecessary to disassemble the stationary support member 11 pivoting the rotary shaft 10 or the coolant coupling device 14, 514 which is built integral therewith from the rotary shaft 10 but also rarely necessary to replace the stationary coolant feeding ring 13.

Between the stationary support member 11 and the stationary coolant feeding ring 13, the drain for discharging coolant 22 (122, 222, 322, 422, 522, 622) is interposed, and the coolant leaking from the clearance between the stationary coolant feeding ring 13 and the rotary shaft 10 is discharged outside from the drain 22 before it reaches the bearing 25 of the stationary support member 11 and does not enter the said bearing 25, fully exhibiting the fail-safe capabilities.

According to the invention related to Claim 2, even when the stationary coolant feeding ring 13 wears after it is used over a long time and oiltightness between the rotary shaft 10 and the stationary coolant feeding ring 13 is slightly lost, the clearance 22 (122, 222, 322, 422, 522, 622) for drain interposed between the stationary support member 11 and stationary coolant feeding ring 13 serves to discharge outside the coolant leaking from the clearance between the stationary coolant feeding ring 13 and the rotary shaft 10 before the coolant reaches the bearing of the stationary support member 11 and prevents the coolant from entering the said bearing 25, enabling the fail-safe capabilities to be exhibited to its maximum, and at the same time because the stationary coolant feeding ring 13 is built separately from the stationary support member 11, the material of the stationary coolant feeding ring 13 can be changed from that of the stationary support member 11 and can be optionally selected, for example, it can be formed with hard synthetic resin or material different from the rotary shaft 10 such as gun metal.

According to the invention related to Claim 3, because the removable sleeve 19, 519 is interposed between the stationary coolant feeding ring 13 and the rotary shaft 10, if the sleeve 19, 519 wears during the long-period application, the said sleeve only may be removed from the rotary shaft 10 and replaced with a new sleeve.

According to the invention related to Claim 4, because a pair of lips 13a, 13a is protrudably mounted on the inner circumferential surface of the stationary coolant feeding ring 13 and the said lips 13a, 13a are designed to come in close contact with the said sleeve 19, not only oiltightness between the two can be secured but also both lips 13a, 13a are elastically deformed with the pressure of the coolant fed to the inner circumferential surface side of the stationary coolant feeding ring 13 and brought more strongly in contact with the sleeve 19,thereby further improving oiltightness between the two.

According to the invention related to Claim 5, even when the stationary coolant feeding ring 213 wears after it is used over a long time and oiltightness between the rotary shaft 10 and the stationary coolant feeding ring 213 is slightly lost, the drain passage 222 which is located between the stationary support member 211 and stationary coolant feeding ring 213 and is in communication with the outside is provided inside the stationary coolant feeding ring 213 serves to discharge outside the coolant leaking from the clearance between the stationary-coolant feeding ring 213 and the rotary shaft 10 before the coolant reaches the bearing of the stationary support member 211 and prevents the coolant from entering the said bearing 25, enabling the fail-safe capabilities to be exhibted to its maximum.

According to the invention related to Claim 6, because the stationary coolant feeding ring 13, 113, 213, 413, 513, 613 built separately from the stationary support member 11, 111, 211, 411, 511, 611 is formed with hard synthetic resin or gun metal, it can be easily machined and fabricated at low costs, and because it is possible to select the material with a small frictional coefficient, it can be used stably over a comparatively long period of time.

According to the invention related to Claim 7, even when the stationary coolant feeding ring 313 wears after it is used over a long time and oiltightness between the rotary shaft 10 and the stationary coolant feeding ring 313 is slightly lost, the drain passage 322 interposed between the stationary support member 11 and stationary coolant feeding ring 313 serves to discharge outside the coolant leaking from the clearance between the stationary coolant feeding ring 313 and the rotary shaft 10 before the coolant reaches the bearing 25 of the stationary support member 311 and prevents the coolant from entering the said bearing 25, enabling the fail-safe capabilities to be exhibited to its maximum, and at the same time, because the stationary coolant feeding ring 313 is built integral with the stationary support member 313, the stationary coolant ring 313 is securely supported by the stationary support member 311 and achieves a simple construction.

According to the invention related to Claim 8, because the said stationary coolant feeding ring 313 comprises an outside cover 311a formed integral with the stationary support member 311 and a stationary coolant feeding ring member 313a which is independent from the said outside cover 311a but supported on the inner side, when the stationary coolant feeding ring member 313a directly in contact with the rotary shaft 10 wears, it is not required to replace the whole stationary coolant feeding ring 313 but only the stationary coolant feeding ring member 313a is replaced, resulting in low costs.

According to the invention related to Claim 9, because the said stationary coolant feeding ring member 313a is made from hard synthetic resin or gun meal, it is easy to be machined and fabricated at low costs, and because the material with a small frictional coefficient, it can be used stably over a comparatively long period of time.

According to the invention related to Claim 10, when the inner circumferential surface of the stationary coolant feeding ring 13, 513 wears due to cutting chips, etc. which enter between the outer circumferential surface of the rotary shaft 10 and the inner circumferential surface of the stationary coolant feeding ring 13, 513 after the application over a long period of time, resulting in a dent, losing oiltightness between the two, and requiring replacement of the stationary coolant feeding ring 13, 513, with the replaceable coolant pipe 15, 515 released from either the stationary coolant feeding ring 13, 513 or the coolant coupling device 14, 514, the stationary coolant feeding ring 13, 513 should be moved along the outer circumferential surface of the rotary shaft 10 and removed from the socket 24 side.

That is, in this event, it is not at all necessary to disassemble the stationary support member 11, 511 pivoting the rotary shaft 10 or the coolant coupling device 14, 514 built integral therewith from the rotary shaft 10.

According to the invention related to Claim 11, when the outer circumferential surface of the sleeve 19, 519 wears due to cutting chips, etc. which enter between the outer circumferential surface of the sleeve 19, 519 and the inner circumferential surface of the stationary coolant feeding ring 13, 513 after the application over a long period of time, resulting in a dent, losing oiltightness between the two, and requiring replacement of the sleeve 19, 519, with the replaceable coo!ant pipe 15, 515 released from the coolant coupling device 14, 514, the sleeve 19, 519 should be moved along the outer circumferential surface of the rotary shaft 10 together with the stationary coolant feeding ring 13, 513 and removed from the socket 24 side.

That is, again, in this event, it is not at all necessary to disassemble the stationary support member 11, 511 pivoting the rotary shaft 10 or the coolant coupling device 14, 514 built integral therewith from the rotary shaft 10.

The renewed sleeve 19, 519 is again mounted to the outer circumferential surface of the rotary shaft 10 together with the stationary coolant feeding ring 13, 513 and the coolant pipe 15, 515 is connected with the coolant coupling device 14, 514, and with this operation, a series of the coolant feeding passage is formed.

According to the invention related to Claim 12, the tool holder assembly is formed by interposing the oiltight ring 520 between the stationary coolant feeding ring 513 and the sleeve 519, securing good oiltightness between the two.

According to the invention related to Claim 13, the tool holder assembly is formed by interposing the sub-oiltight ring 21, 521 between the sleeve 19, 519 and the rotary shaft 10, securely peventing an entry of coolant to the bearing 25 side.

According to the invention related to Claim 14, because the tool holder assembly is formed by providing the threads 40, 40 on the inner circumferential surface of the stationary coolant feeding ring 113, with the annular groove 17 provided on the said inner circumferential surface in between, and on both sides thereof, the coolant is restricted by the thread 40 by frictional action between the said thread 40 and the coolant when the coolant tries to leak outside from the clearance between the stationary coolant feeding ring 113 and the rotary shaft 10 on the way of rotation of the rotary shaft 10; this prevents the leakage as much as possible and exhibits the action to push back the coolant to the annular groove 17. That is, the said thread 40 is formed in the direction which pushes back the coolant leaking from the outer circumferential surface thereof during the rotation of the rotary shaft 10 toward the annular groove 17 side.

According to the invention related to Claim 15, because the stationary coolant feeding ring 13, 513 is supported non-rotatably to the coolant coupling device 13, 513 on the machine tool side via the said coolant pipe 15, 515, a series of coolant passages farmed via said stationary coolant ring 13, 513 are securely maintained.

According to the invention related to Claim 16, because the stationary coolant feeding ring 513 is engaged with the stationary support member 511 by the engagement means 38, 39 and is held stationary, a series coolant feeding passage formed via the said stationary coolant feeding ring 13, 513 is securely maintained.

According to the invention related to Claim 17, the stationary support member 11, 511 is integrally built with the coolant coupling device 14, 514 which can be connected to the coolant feeding base 23 provided on the machine tool side, and is equipped with a positioner plate 31, 531 to prevent relative rotation of the coolant coupling device 14, 514 and the rotary shaft 10 by allowing the two to check each other when the said coolant coupling device 14, 514 is not connected with the coolant feeding base 23 as well as relases the checking condition between the coolant coupling device 14, 514 and the rotary shaft 10 and enables rotation of the rotary shaft 10 when the coolant coupling device 14, 514 is connected with the coolant feeding base 23, and, therefore, the stationary support member 11, 511 and the coolant coupling device 14, 51 integral therewith are transported from the spindle 48 to magazines free of oscillation and are accurately placed in magazines under the fixed condition integral with the rotary shaft 10 when they are released from the spindle 48 on the machine tool side.

Although the present invention has been described in terms of the presently preferred embodiments, it is to be understood that such disclosure is not to be interpreted as limiting.

Various alterations and modifications will no doubt become apparent to those skilled in the art after having read the above disclosure.

Accordingly, it is intended that appended claims be interpreted as covering all alterations and modifications as fall within the scope of the invention as claimed.

## Claims

1. A coolant feeder in combination with a tool holder assembly which comprises a rotary shaft (10) mounted to the spindle of a machine tool, in which a stationary coolant feeding ring (13; 113; 213; 413; 513; 613) having an annular groove (17) on the inner side thereof so as to communicate with a radial passage (12) provided in the rotary shaft (10) for delivering coolant to a tool to be held in the rotary shaft, and the stationary coolant feeding ring (13) on the machine tool side is connected with the coolant pipe (15; 515), **characterised in that** a stationary support member (11; 111; 211; 311; 411; 511; 611) rotatably supports said rotary shaft (10) and the stationary coolant feeding ring (13; 113; 213; 413; 513; 613;) is fitted over the rotary shaft (10) adjacent to the said stationary support member (11) and a coolant coupling device (14; 514) on the machine tool side is connected with the coolant pipe (15; 515) so that a coolant passing hollow (16) inside said coolant coupling device (14; 514) is allowed to be in communication with the annular groove (17) of the stationary coolant feeding ring (13; 513) via an inside passage (18) of the said coolant pipe (15; 515) and a drain (22; 122; 222; 322; 422; 522; 622) is interposed between the stationary support member (11) and the stationary coolant ring (13).

2. A coolant feeder in combination with a tool holder assembly according to claim 1, wherein the stationary support member (11) and the stationary coolant feeder ring (13) are mounted separately and the said drain (22) is formed by a clearance (22) interposed therebetween.

3. A coolant feeder in combination with a tool holder assembly according to claim 1, wherein a removable sleeve (19) is interposed between the said stationary coolant feeding ring (13) and the rotary shaft (10).

4. A coolant feeder in combination with a tool assembly according to claim 3, wherein a pair of lips (13a, 13a) protrude on the inner circumferential surface of the said stationary coolant feeding ring 13 and both the lips (13a, 13a) are brought in close contact with the said sleeve (19).

5. A coolant feeder in combination with a tool holder assembly according to claim 2, wherein the said drain (22) is formed by a drain hole (222) which connects the inside of the stationary coolant feeding ring (213) to the outside thereof.

6. A coolant feeder in combination with a tool holder assembly according to claim 2, wherein the said stationary coolant feeding ring (13, 113, 213, 413, 513, 613) is of a hard synthetic resin or of gun metal.

7. A coolant feeder in combination with a tool holder assembly according to claim 1, wherein the stationary support member (311) is built integral with the stationary coolant feeding ring (313), and the said drain (22) is a passage (322) provided therebetween.

8. A coolant feeder in combination with a tool holder assembly according to claim 7, wherein the said stationary coolant feeding-ring (313) comprises an outside cover (311a) formed integral with the stationary support member (311) and a stationary coolant lubricating ring member (313a) which is different from the said outside cover (311a).

9. A coolant feeder in combination with a tool holder assembly according to claim 8, wherein the said stationary coolant lubricating ring member (313a) is of a hard synthetic resin or of gun metal.

10. A coolant feeder in combination with a tool holder assembly according to claim 2, wherein the stationary support member (11, 511) is built separately from the stationary coolant feeding ring (13, 513) and the coolant pipe (15, 515) is removably mounted.

11. A coolant feeder in combination with a tool holder assembly according to claim 10, wherein a removable sleeve (19) is interposed between the stationary coolant feeding ring (13, 513) and the rotary shaft (10), and the sleeve (19, 519) is rotatable integrally with the rotary shaft (10) and removable from the said rotary shaft (10).

12. A coolant feeder in combination with a tool holder assembly according to claim 10, wherein an oil-tight ring (20, 520) is interposed between the stationary coolant feeding ring (13, 513) and the sleeve (19, 519).

13. A coolant feeder in combination with a tool holder assembly according to claim 12, wherein a sub-oil-tight ring (21, 521) is interposed between the said sleeve (19, 519) and the rotary shaft (10).

14. A coolant feeder in combination with a tool holder assembly according to claim 2, wherein threads (40) are cut on the inner circumferential surface of the stationary coolant feeding ring (113) in front of and behind the annular groove (17).

15. A coolant feeder in combination with a tool holder assembly according to claim 2, wherein the stationary coolant feeding ring (13, 513) is non-rotatably supported on the coolant coupling device (14, 514) on the machine tool side by the said coolant pipe (15, 515).

16. A coolant feeder in combination with a tool holder assembly according to claim 2, wherein the stationary coolant feeding ring (13, 513) is engaged with and supported non-rotatably on the stationary support member (511) by the engagement means (38, 39).

17. A coolant feeder in combination with a tool holder assembly according to claim l, wherein the stationary support member (11, 511) is built integral with the coolant coupling device (14, 514) which is adapted to be joined to a coolant feeding base (23) provided on the machine tool side and is equipped with a positioner plate (31, 531) adapted to prevent the rotation of the rotary shaft (10) relative to the coolant coupling device (14, 514) by mutual restriction when the said coolant coupling device (14, 514) is not joined to the coolant feeding base (23) as well as releases the mutual restriction between the coolant coupling device (14, 514) and the rotary shaft (10) and enables rotation of the rotary shaft (10) relative to the coolant coupling device when the coolant coupling device (14, 514) is connected with the coolant feeding base (23).

## Patentansprüche

1. Kühlmittelversorger in Kombination mit einem Werkzeughalteraufbau, der eine Drehwelle (10) an der Spindel eines Werkzeugs befestigt umfasst, in dem ein stationärer Kühlmittelversorgerring (13; 113; 213; 413; 513; 613) in der Drehwelle (10) vorgesehen ist, der eine ringförmige Nut (17) an der Innenseite davon aufweist, um mit einer radialen Leitung (12), die in der Drehwelle (10) zur Zufuhr von Kühlmittel zu einem Werkzeug, das in der Drehwelle gehalten wird, verbunden zu sein, und der stationäre Kühlmittelversorgerring (13) ist an der Werkzeugseite mit der Kühlmittelleitung (15; 515) verbunden, dadurch gekennzeichnet, dass ein stationäres Lagerteil (11; 111; 211; 311; 411; 511; 611) drehbar die Drehwelle (10) lagert und der stationären Kühlmittelversorgerring (13; 113; 213; 413; 513; 613) über die Drehwelle (10) gepasst ist, angrenzend an das stationäre Lagerteil (11) und eine Kühlmittelanschlusseinrichtung (14; 514) an der Werkzeugseite mit der Kühlmittelleitung (15; 515) verbunden ist, so dass es einem Kühlmittelübergangshohlraum (16) innerhalb der Kühlmittelanschlusseinrichtung (14; 514) möglich ist, mit der ringförmigen Nut (17) des Kühlmittelversorgerringes (13; 513) über eine Innenpassage (18) der Kühlmittelleitung (15; 515) in Verbindung zu stehen, und ein Abfluss (22; 122; 222; 322; 422; 522; 622) ist zwischen dem stationären Lagerteil (11) und dem stationären Kühlmittelring (13) angeordnet.

2. Kühlmittelversorger in Kombination mit einem Werkzeughalteraufbau nach Anspruch 1, worin das stationäre Lagerteil (11) und der stationäre Kühlmittelversorgerring (13) getrennt befestigt sind, und der Abfluss (22) durch einen dazwischen angeordneten Zwischenraum (22) gebildet wird.

3. Kühlmittelversorger in Kombination mit einem Werkzeughalteraufbau nach Anspruch 1, worin eine entfernbare Büchse (19) zwischen dem stationären Kühlmittelversorgerring (13) und der Drehwelle (10) angeordnet ist.

4. Kühlmittelversorger in Kombination mit einem Werkzeughalteraufbau nach Anspruch 3, worin ein Paar Lippen (13a, 13a) an der inneren Umfangsfläche des Kühlmittelversorgerringes (13) hervorstehen und beide Lippen (13a, 13a) in engen Kontakt mit der Büchse (19) gebracht werden.

5. Kühlmittelversorger in Kombination mit einem Werkzeughalteraufbau nach Anspruch 2, worin der Abfluss (22) durch eine Abflussöffnung (222) gebildet wird, die das Innere des stationären Kühlmittelversorgerringes (213) mit dessen Außenseite verbindet.

6. Kühlmittelversorger in Kombination mit einem Werkzeughalteraufbau nach Anspruch 2, worin der stationäre Kühlmittelversorgerring (13; 113; 213; 413; 513; 613) aus einem harten Kunstharz oder aus Gusszinnbronze besteht.

7. Kühlmittelversorger in Kombination mit einem Werkzeughalteraufbau nach Anspruch 1, worin das stationäre Lagerteil (311) einstückig mit dem stationären Kühlmittelversorgerring (313) gebaut ist, und der Abfluss (22) eine dazwischen vorgesehene Leitung (322) ist.

8. Kühlmittelversorger in Kombination mit einem Werkzeughalteraufbau nach Anspruch 7, worin der stationäre Kühlmittelversorgerring (313) eine äußere Abdeckung (311a), die einstückig mit dem stationären Lagerteil (311) ausgebildet ist, und ein stationäres Kühlmittelschmierringteil (313a) umfasst, das von der äußeren Abdeckung (311a) verschieden ist.

9. Kühlmittelversorger in Kombination mit einem Werkzeughalteraufbau nach Anspruch 8, worin das stationäre Kühlmittelschmierringteil (313a) aus einem harten Kunstharz oder aus Gusszinnbronze besteht.

10. Kühlmittelversorger in Kombination mit einem Werkzeughalteraufbau nach Anspruch 2, worin das stationäre Lagerteil (11, 511) getrennt von dem stationären Kühlmittelversorgerring (13, 513) gebaut ist und die Kühlmittelleitung (15, 515) entfernbar befestigt ist.

11. Kühlmittelversorger in Kombination mit einem Werkzeughalteraufbau nach Anspruch 10, worin eine entfernbare Büchse (19) zwischen dem stationären Kühlmittelversorgerring (13, 513) und der Drehwelle (10) angeordnet ist, und die Büchse (19, 519) einstückig mit der Drehwelle (10) drehbar und von der Drehwelle (10) entfernbar ist.

12. Kühlmittelversorger in Kombination mit einem Werkzeughalteraufbau nach Anspruch 10, worin ein öldichter Ring (20, 520) zwischen dem stationären Kühlmittelversorgerring (13, 513) und der Büchse (19, 519) angeordnet ist.

13. Kühlmittelversorger in Kombination mit einem Werkzeughalteraufbau nach Anspruch 12, worin ein fast öldichter Ring (21, 521) zwischen der Büchse (19, 519) und der Drehwelle (10) angeordnet ist.

14. Kühlmittelversorger in Kombination mit einem Werkzeughalteraufbau nach Anspruch 2, worin Gewinde (40) an der inneren Umfangsfläche des stationären Kühlmittelversorgerringes (113) vor und hinter der ringförmigen Nut (17) geschnitten sind.

15. Kühlmittelversorger in Kombination mit einem Werkzeughalteraufbau nach Anspruch 2, worin der stationäre Kühlmittelversorgerring (13, 513) nichtdrehbar auf der Kühlmittelanschlusseinrichtung (14; 514) auf der Werkzeugseite durch die Kühlmittelleitung (15, 515) gelagert ist.

16. Kühlmittelversorger in Kombination mit einem Werkzeughalteraufbau nach Anspruch 2, worin der stationäre Kühlmittelversorgerring (13, 513) mit dem stationären Lagerteil (511) in Eingriff ist und auf diesem nicht-drehbar durch die Eingreifteile (38, 39) gelagert ist.

17. Kühlmittelversorger in Kombination mit einem Werkzeughalteraufbau nach Anspruch 1, worin das stationäre Lagerteil (11, 511) einstückig mit der Kühlmittelanschlusseinrichtung (14; 514) gebaut ist, die dazu geeignet ist, mit einer Kühlmittelversorgerbasis (23) verbunden zu werden, die an der Werkzeugseite vorgesehen ist, und die mit einer Positionierplatte (31, 531) ausgestattet ist, die dazu geeignet ist, die Drehung der Drehwelle (10) relativ zu der Kühlmittelanschlusseinrichtung (14; 514) durch wechselseitige Begrenzung zu verhindern, wenn die Kühlmittelanschlusseinrichtung (14; 514) nicht mit der Kühlmittelversorgerbasis (23) verbunden ist, sowie die wechselseitige Begrenzung zwischen der Kühlmittelanschlusseinrichtung (14; 514) und der Drehwelle (10) löst und die Drehung der Drehwelle (10) relativ zu der Kühlmittelanschlusseinrichtung ermöglicht, wenn die Kühlmittelanschlusseinrichtung (14; 514) mit der Kühlmittelversorgerbasis (23) verbunden ist.

## Revendications

1. Distributeur d'agent de refroidissement en combinaison avec un agencement de porte-outil, qui comprend un axe de rotation (10) monté sur la broche d'une machine-outil, dans lequel une bague stationnaire d'alimentation en agent de refroidissement (13; 113; 213; 413; 513; 613) présente une rainure annulaire (17) sur sa face intérieure, de façon à communiquer avec un passage radial (12) prévu dans l'axe de rotation (10), pour délivrer un agent de refroidissement à un outil devant être maintenu dans l'axe de rotation, et la bague stationnaire d'alimentation en agent de refroidissement (13) est connectée du côté machine-outil à un conduit pour agent de refroidissement (15; 515), caractérisé en ce qu'un organe de support stationnaire (11; 111; 211; 311; 411; 511; 611) supporte à rotation le dit axe de rotation (10), et la bague stationnaire d'alimentation en agent de refroidissement (13; 113; 213; 413; 513; 613) est ajustée sur l'axe de rotation (10), de manière contigue au dit organe de support stationnaire (11), et un dispositif de couplage (14; 514) pour agent de refroidissement est connecté du côté machine-outil au conduit pour agent de refroidissement (15; 515) de sorte qu'un creux de passage d'agent de refroidissement (16) à l'intérieur du dit dispositif de couplage pour agent de refroidissement (14; 514) peut entrer en communication avec la rainure annulaire (17) de la bague stationnaire d'alimentation en agent de refroidissement (13; 513) par l'intermédiaire d'un passage interne (18) du dit conduit pour agent de refroidissement (15; 515), et un drain (22; 122; 222; 322; 422; 522; 622) est interposé entre l'organe de support stationnaire (11) et la bague stationnaire pour agent de refroidissement (13).

2. Distributeur d'agent de refroidissement en combinaison avec un agencement de porte-outil selon la revendication 1, dans lequel l'organe de support stationnaire (11) et la bague stationnaire d'alimentation en agent de refroidissement (13) sont montés séparément, et le dit drain (22) est formé par un espace libre (22) interposé entre eux.

3. Distributeur d'agent de refroidissement en combinaison avec un agencement de porte-outil selon la revendication 1, dans lequel un manchon amovible (19) est interposé entre la dite bague stationnaire d'alimentation en agent de refroidissement (13) et l'axe de rotation (10).

4. Distributeur d'agent de refroidissement en combinaison avec un agencement de porte-outil selon la revendication 3, dans lequel une paire de lèvres (13a, 13a) font saillie sur la surface circonférentielle intérieure de la dite bague stationnaire d'alimentation en agent de refroidissement (13), et les deux lèvres (13a, 13a) sont amenées en contact étroit avec le dit manchon (19).

5. Distributeur d'agent de refroidissement en combinaison avec un agencement de porte-outil selon la revendication 2, dans lequel le dit drain (22) est formé par un orifice de drain (222) qui relie l'intérieur de la bague d'alimentation en agent de refroidissement (213) à l'extérieur de celle-ci.

6. Distributeur d'agent de refroidissement en combinaison avec un agencement de porte-outil selon la revendication 2, dans lequel la dite bague d'alimentation en agent de refroidissement (13, 113, 213, 413, 513, 613) est constituée d'une résine synthétique dure ou d'un métal pour arme à feu.

7. Distributeur d'agent de refroidissement en combinaison avec un agencement de porte-outil selon la revendication 1, dans lequel l'organe de support stationnaire (311) est construit d'une pièce avec la bague stationnaire d'alimentation en agent de refroidissement (313), et le dit drain (22) est un passage (322) prévu entre eux.

8. Distributeur d'agent de refroidissement en combinaison avec un agencement de porte-outil selon la revendication 7, dans lequel la dite bague stationnaire d'alimentation en agent de refroidissement (313) comprend une enveloppe extérieure (311a) formée d'une pièce avec l'organe de support stationnaire (311), et un organe annulaire d'alimentation en agent de refroidissement (313a) lequel est différent de la dite enveloppe extérieure (311a).

9. Distributeur d'agent de refroidissement en combinaison avec un agencement de porte-outil selon la revendication 8, dans lequel le dit organe annulaire d'alimentation en agent de refroidissement (313a) est constitué d'une résine synthétique dure ou d'un métal pour arme à feu.

10. Distributeur d'agent de refroidissement en combinaison avec un agencement de porte-outil selon la revendication 2, dans lequel l'organe de support stationnaire (11, 511) est construit séparément de la bague stationnaire d'alimentation en agent de refroidissement (13, 513), et le conduit pour agent de refroidissement (15, 515) est monté de manière amovible.

11. Distributeur d'agent de refroidissement en combinaison avec un agencement de porte-outil selon la revendication 10, dans lequel un manchon amovible (19) est interposé entre la bague stationnaire d'alimentation en agent de refroidissement (13, 513) et l'axe de rotation (10), et le manchon (19, 519) tourne solidairement avec l'axe de rotation (10), et est détachable du dit axe de rotation (10).

12. Distributeur d'agent de refroidissement en combinaison avec un agencement de porte-outil selon la revendication 10, dans lequel une bague étanche à l'huile (20, 520) est interposée entre la bague stationnaire d'alimentation en agent de refroidissement (13, 513) et le manchon (19, 519).

13. Distributeur d'agent de refroidissement en combinaison avec un agencement de porte-outil selon la revendication 12, dans lequel une bague étanche sous huile (21, 521) est interposée entre le dit manchon (19, 519) et l'axe de rotation (10).

14. Distributeur d'agent de refroidissement en combinaison avec un agencement de porte-outil selon la revendication 2, dans lequel des filets (40) sont formés sur la surface circonférentielle intérieure de la bague stationnaire d'alimentation en agent de refroidissement (113) devant et derrière la rainure annulaire (17).

15. Distributeur d'agent de refroidissement en combinaison avec un agencement de porte-outil selon la revendication 2, dans lequel la bague stationnaire d'alimentation en agent de refroidissement (13, 513) est soutenue de manière non-rotative sur le dispositif de couplage pour agent de refroidissement (14, 514) du côté machine-outil, par le dit conduit pour agent de refroidissement (15, 515).

16. Distributeur d'agent de refroidissement en combinaison avec un agencement de porte-outil selon la revendication 2, dans lequel la bague stationnaire d'alimentation en agent de refroidissement (13, 513) est engagée avec, et soutenue de manière non-rotative sur l'organe de support stationnaire (511) par les moyens d'engagement (38, 39).

17. Distributeur d'agent de refroidissement en combinaison avec un agencement de porte-outil selon la revendication 1, dans lequel l'organe de support stationnaire (11, 511) est construit d'une pièce avec le dispositif de couplage pour agent de refroidissement (14, 514) qui est adapté pour être relié à une base d'alimentation en agent de refroidissement (23) prévue du côté machine-outil, et est équipé d'une plaque de positionnement (31, 531) prévue pour empêcher la rotation de l'axe de rotation (10) par rapport au dispositif de couplage pour agent de refroidissement (14, 514) par restriction mutuelle lorsque le dit dispositif de couplage pour agent de refroidissement (14, 514) n'est pas relié à la base d'alimentation en agent de refroidissement (23), de même qu'il libère la restriction mutuelle entre le dispositif de couplage pour agent de refroidissement (14, 514) et l'axe de rotation (10), et permet la rotation de l'axe de rotation (10) relative au dispositif de couplage pour agent de refroidissement lorsque le dispositif de couplage pour agent de refroidissement (14, 514) est connecté à la base d'alimentation en agent de refroidissement (23).
